# EUROPEAN PATENT APPLICATION

(11) **EP 4 324 806 A1**
(43) Date of publication of application: **21.02.2024**
(21) Application number: 23191431.8
(22) Date of filing: 15.08.2023
(51) Int. Cl.: C04B 28/00

(54) **METHOD OF PRODUCING CONCRETE-LIKE MATERIAL FROM WASTE MATERIALS**

(30) Priority: 15.08.2022 FI 20225725
(71) Applicant: EcoUp Oyj, 90100 Oulu (FI)
(72) Inventor: Hirvensalo, Ilari, Mäntsälä (FI); Koponen, Hanna-Kaisa, Porvoo (FI)
(74) Representative: Wilenius, Jami Juhani

(57) **Abstract**

A method of producing geopolymer concrete by obtaining (11) a pulverized solid waste comprising silicon and adding (12) an alkaline waste comprising liquid waste or water-soluble waste. The method comprises adding (13) of water and mixing (14) the waste materials and water to a homogeneous mixture and curing (15) said mixture.

## Description

### FIELD OF THE INVENTION

The invention relates to a method of producing a hardening material, a concrete-like material or a geopolymer concrete from waste materials.

### PRIOR ART

Construction materials used in buildings, constructions and other structures have a limited life span and are difficult to recycle at the end of their life span. Typically, the materials are either burned for energy or crushed and used as a filler. A better solution would be to use the materials again in new products.

Geopolymers have been used in manufacturing of a concrete-like material which does not require Portland cement. Often geopolymers include recycled materials such as fly ash or blast furnace slag due. However, the manufacturing of such geopolymer concrete requires use of various additives and chemicals. This leads to use of virgin raw materials and thereby waste materials are not used to a full extent.

CN113831152A discloses a method of geopolymer concrete preparation involving use of industrial waste and/or construction waste as coarse aggregate, and using slag and fly ash as cement materials to reduce carbon dioxide emissions. In addition, rosin resin foaming agent, nano silicon carbide, sodium hydroxide and aqueous solution of sodium silicate are needed.

### BRIEF DESCRIPTION OF THE INVENTION

The object of the invention is a method which alleviates the drawbacks of the prior art. The method concerns production of geopolymer concrete and is based on using a combination of two or more waste materials to reduce or eliminate the need of new materials.

### BRIEF DESCRIPTION OF THE FIGURES

The invention is now described in more detail in connection with preferred embodiments, with reference to the accompanying drawings, in which:
Fig. 1 shows a flowchart of a method according to a simple embodiment using two types of material;
Fig. 2 shows another flowchart of a method according to an embodiment using three types of material; and
Fig. 3 shows yet another flowchart of a method according to an embodiment using four types of material.

### DETAILED DESCRIPTION OF THE INVENTION

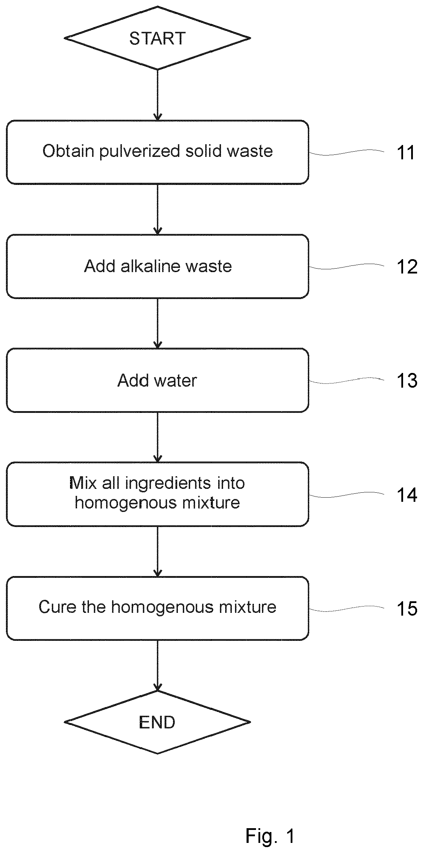

Figure 1 shows a flow chart of a method of producing geopolymer concrete using two types of material and water. The term geopolymer concrete refers to hardening materials which comprise pulverized solid material, an alkaline component and water.

The method is for producing geopolymer concrete from at least two waste materials. At least one of the waste materials is pulverized solid waste comprising silicon. In some cases, it can be advantageous to use two different solid wastes or even three or more. In a preferred embodiment the pulverized solid waste is a waste from a demolished building or structure. Preferably, the pulverized solid waste is a mineral-based waste. A demolition of a building typically results vast amount of various waste materials and many of the most common materials are suitable for the method. In a typical building, most of the waste is bricks, concrete, mineral wool, stone and glass which all have a high silicon content and those can be used in the method after pulverization. In an embodiment, the pulverized solid waste comprises at least 95 weight-% of mineral wool, concrete, brick, glass or stone, the remainder being impurities. In an embodiment, the pulverized solid waste consists of particle sizes up to 300 micrometres, preferably up to 200 micrometres and more preferably up to 100 micrometres.

At least one of said waste materials is an alkaline waste comprising liquid waste or water-soluble waste. By nature, this alkaline waste is typically a sidestream, a left-over or just simply waste from a chemical process plant or more generally from industry. Preferably, the alkaline waste is material that has been used in a process and cannot be used again without further processing. Alternatively, the alkaline waste can be an unwanted, and often unavoidable, result of a process, such as a chemical process. When the alkaline waste has already been used somewhere, it typically contains one or more other substances dissolved or mixed therein. Preferably said other substances are active substances in the process of producing the geopolymer concrete. For example, after an aluminium cast is removed from a mould, any aluminium residues are removed with sodium hydroxide. As the aluminium dissolves into the sodium hydroxide, the sodium hydroxide solution becomes less and less effective until it becomes saturated and unable to dissolve any more aluminium. This saturated or partially saturated sodium hydroxide solution is a good alkaline because it also comprises aluminium which is beneficial in the method when aiming at high compression strength geopolymer concrete. Similarly, for example lime sludge and pulverized gypsum can be used. In an embodiment, the alkaline waste is a waste from aluminium industry and the alkaline waste comprising sodium hydroxide and aluminium. In another embodiment, the alkaline waste comprises lime sludge. In yet another embodiment, the alkaline waste comprises pulverized gypsum.

The method comprises a step 11 of obtaining the pulverized solid waste. The mass of the pulverized solid waste is at least 40 weight-% of the total mass of the waste materials, preferably at least 50 weight-% and more preferably at least 60 weight-%. Use of waste material aggregates lowers the weight-% of the pulverized solid waste and therefore higher weight-% of pulverized solid waste is preferred in embodiments without aggregates and embodiments with low aggregate content.

The method comprises a step 12 of adding the alkaline waste into the pulverized solid waste. The mass of the alkaline waste is at least 10 weight-% of the total mass of the waste materials. The mass of the alkaline waste is preferably at most 25 weight-% of the total mass of the waste materials and more preferably at least 15 weight-% and at most 25 weight-%. Needless to say, that the total amount of waste materials is always 100 weight-%.

The method further comprises a step 13 of adding water to the mixture of the pulverized solid waste and the alkaline waste until water content of the formed solution is at least 10 weight-% and at most 50 weight-%, preferably the water content is at most 40 weight-% and more preferably at least 15 weight-% and at most 35 weight-%. Said step of adding water can of course be omitted if the alkaline waste comprises enough water such that the water content of the mixture of the waste materials is already in the defined range. The order in which the ingredients are added may vary. The ingredients can be added in the presented order or in any other order - or adding all the ingredients simultaneously. In an embodiment, water is added to the alkaline waste before mixing it with pulverized solid waste.

Once all the ingredients are put together, the next step of the method is a step 14 of mixing said pulverized solid waste, said alkaline waste and water to form a homogeneous mixture. Conventional mixers used with concrete are suitable for mixing the ingredients. A skilled person is easily able to come up a suitable mixing system to result a homogeneous mixture from the ingredients in question.

When the step of mixing has resulted a homogeneous mixture, the next step of the method is a step 15 of curing said homogeneous mixture. The homogeneous mixture cures by itself in about room temperature. Before the curing step, the homogeneous mixture can be poured into a mould to result e.g. a loose brick or slab, a building block or a decorative item. As an alternative the homogeneous mixture poured into a mould could also result a fixed structure or part of a fixed structure or building, e.g. a foundation. Yet another alternative is to spread or spray the homogeneous mixture onto a surface before the curing step. One more alternative is to dry press the homogenous mixture prior to or during the curing. In a preferred embodiment, the curing step lasts at most 48 hours in a temperature of 10 °C to 30 °C. After the curing step, the method of Figure 1 is completed.

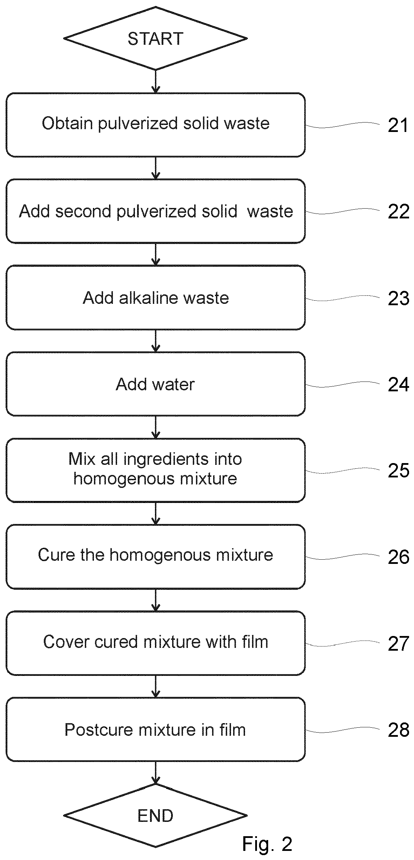

Figure 2 shows a flow chart of a method of producing geopolymer concrete using three types of material and water.

The method is for producing geopolymer concrete from at least two waste materials, and in this particular case, from three waste materials. One of the waste materials is pulverized solid waste comprising silicon. In some cases, it can be advantageous to use two different solid wastes or even three or more. They all can comprise silicon but not necessarily. In a preferred embodiment the pulverized solid waste is a waste from a demolished building or structure. Preferably, the pulverized solid waste is a mineral-based waste. A demolition of a building typically results vast amount of various waste materials and many of the most common materials are suitable for the method. In a typical building, most of the waste is bricks, concrete, mineral wool, stone and glass which all have a high silicon content and those can be used in the method after pulverization. In an embodiment, the pulverized solid waste comprises at least 95 weight-% of mineral wool, concrete, brick, glass or stone, the remainder being impurities. In an embodiment, the pulverized solid waste consists of particle sizes up to 300 micrometres, preferably up to 200 micrometres and more preferably up to 100 micrometres.

At least one of said waste materials is an alkaline waste comprising liquid waste or water-soluble waste. By nature, this alkaline waste is typically a sidestream, a left-over or just simply waste from a chemical process plant or more generally from industry. Preferably, the alkaline waste is material that has been used in a process and cannot be used again without further processing. Alternatively, the alkaline waste can be an unwanted, and often unavoidable, result of a process, such as a chemical process. When the alkaline waste has already been used somewhere, it typically contains one or more other substances dissolved or mixed therein. Preferably said other substances are active substances in the process of producing the geopolymer concrete. For example, after an aluminium cast is removed from a mould, any aluminium residues are removed with sodium hydroxide. As the aluminium dissolves into the sodium hydroxide, the sodium hydroxide solution becomes less and less effective until it becomes saturated and unable to dissolve any more aluminium. This saturated or partially saturated sodium hydroxide solution is a good alkaline because it also comprises aluminium which is beneficial in the method when aiming at high compression strength geopolymer concrete. Similarly, for example lime sludge and pulverized gypsum can be used. In an embodiment, the alkaline waste is a waste from aluminium industry and the alkaline waste comprising sodium hydroxide and aluminium. In another embodiment, the alkaline waste comprises lime sludge. In yet another embodiment, the alkaline waste comprises pulverized gypsum.

The method comprises a step 21 of obtaining the pulverized solid waste. The mass of the pulverized solid waste is at least 40 weight-% of the total mass of the waste materials, preferably at least 50 weight-% and more preferably at least 60 weight-%. The use of waste material aggregates lowers the weight-% of the pulverized solid waste and therefore higher weight-% of pulverized solid waste is preferred in embodiments without aggregates and embodiments with low aggregate content.

The method of Figure 2 also comprises a step 22 of adding a second pulverized solid waste. Preferably the second pulverized solid waste comprises aluminium, which is especially beneficial in a case where aluminium contents of the pulverized solid waste and the alkaline waste are low or non-existent. The second pulverized solid waste can also be beneficial for adjusting one or more qualities of an end product, for improving workability during curing, and for adjusting curing time. In an embodiment the second pulverized solid waste has a higher aluminium content than the pulverized solid waste. Preferably the mass of the second pulverized solid waste is at most 30 weight-% and more preferably at most 20 weight-% of the total mass of the waste materials.

The method comprises a step 23 of adding the alkaline waste into the pulverized solid waste. The mass of the alkaline waste is at least 10 weight-% of the total mass of the waste materials. The mass of the alkaline waste is preferably at most 25 weight-% of the total mass of the waste materials and more preferably at least 15 weight-% and at most 25 weight-%. Needless to say, that the total amount of waste materials is always 100 weight-%.

The method further comprises a step 24 of adding water to the mixture of the pulverized solid waste, the aggregate and the alkaline waste until water content of the formed solution is at least 10 weight-% and at most 50 weight-%, preferably the water content is at most 40 weight-% and more preferably at least 15 weight-% and at most 35 weight-%. Said step of adding water can of course be omitted if the alkaline waste comprises enough water such that the water content of the mixture of the waste materials is already in the defined range. The order in which the ingredients are added is irrelevant. The ingredients can be added in the presented order or in any other order - or adding all the ingredients simultaneously.

Once all the ingredients are put together, the next step of the method is a step 25 of mixing said pulverized solid waste, said alkaline waste and water, including the aggregate, to form a homogeneous mixture. A skilled person is easily able to come up a suitable mixing system to result a homogeneous mixture from the ingredients in question.

When the step of mixing has resulted a homogeneous mixture, the next step of the method is a step 26 of curing said homogeneous mixture. The homogeneous mixture cures by itself in about room temperature. Before the curing step, the homogeneous mixture can be poured into a mould to result e.g. a loose brick or slab, a building block or a decorative item. As an alternative the homogeneous mixture poured into a mould could also result a fixed structure or part of a fixed structure or building, e.g. a foundation. Yet another alternative is to spread or spray the homogeneous mixture onto a surface before the curing step. One more alternative is to dry press the homogenous mixture prior to or during the curing. In a preferred embodiment, the curing step lasts at most 48 hours in a temperature of 10 °C to 30 °C.

In the method of Figure 2, after the homogenous mixture has cured, the method continues with a step 27 of covering the cured homogenous mixture with a film. The film is preferably an impermeable film, such as a plastic wrap or a plastic sheet or an anti-evaporation film. Other impermeable materials can also be used but plastic is often the cheapest alternative, readily available and easy to handle. In an embodiment, the film is formed by an anti-evaporation spray that is known e.g. from the art of casting of concrete.

The final step of the method of Figure 2 is a step 28 of postcuring the homogeneous mixture covered by a film. Preferably, the postcuring period is at least 14 days after which the film can be removed. This step ends the method of Figure 2. Steps 27 and 28 can be omitted if postcuring is not required.

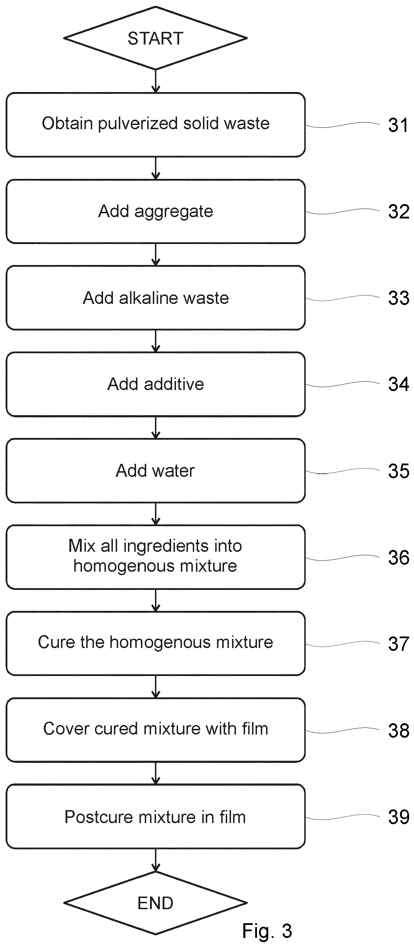

Figure 3 shows a flow chart of a method of producing geopolymer concrete using four types of material and water.

The method is for producing geopolymer concrete from at least two waste materials, and in this particular case with the addition of an aggregate material and an additive. One of the waste materials is pulverized solid waste comprising silicon. In some cases, it can be advantageous to use two different solid wastes or even three or more. They all can comprise silicon but not necessarily. In a preferred embodiment the pulverized solid waste is a waste from a demolished building or structure. Preferably, the pulverized solid waste is a mineral-based waste. A demolition of a building typically results vast amount of various waste materials and many of the most common materials are suitable for the method. In a typical building, most of the waste is bricks, concrete, mineral wool, stone and glass which all have a high silicon content and those can be used in the method after pulverization. In an embodiment, the pulverized solid waste comprises at least 95 weight-% of mineral wool, concrete, brick, glass or stone, the remainder being impurities. In an embodiment, the pulverized solid waste consists of particle sizes up to 300 micrometres, preferably up to 200 micrometres and more preferably up to 100 micrometres.

At least one of said waste materials is an alkaline waste comprising liquid waste or water-soluble waste. By nature, this alkaline waste is typically a sidestream, a left-over or just simply waste from a chemical process plant or more generally from industry. Preferably, the alkaline waste is material that has been used in a process and cannot be used again without further processing. Alternatively, the alkaline waste can be an unwanted, and often unavoidable, result of a process, such as a chemical process. When the alkaline waste has already been used somewhere, it typically contains one or more other substances dissolved or mixed therein. Preferably said other substances are active substances in the process of producing the geopolymer concrete. For example, after an aluminium cast is removed from a mould, any aluminium residues are removed with sodium hydroxide. As the aluminium dissolves into the sodium hydroxide, the sodium hydroxide solution becomes less and less effective until it becomes saturated and unable to dissolve any more aluminium. This saturated or partially saturated sodium hydroxide solution is a good alkaline because it also comprises aluminium which is beneficial in the method when aiming at high compression strength geopolymer concrete. Similarly, for example lime sludge and pulverized gypsum can be used. In an embodiment, the alkaline waste is a waste from aluminium industry and the alkaline waste comprising sodium hydroxide and aluminium. In another embodiment, the alkaline waste comprises lime sludge. In yet another embodiment, the alkaline waste comprises pulverized gypsum.

The method comprises a step 31 of obtaining the pulverized solid waste. The mass of the pulverized solid waste is at least 40 weight-% of the total mass of the waste materials, preferably at least 50 weight-% and more preferably at least 60 weight-%. Use of waste material aggregates lowers the weight-% of the pulverized solid waste and therefore higher weight-% of pulverized solid waste is preferred in embodiments with low aggregate content.

The method of Figure 3 also comprises a step 32 of adding an aggregate. The aggregate can comprise fine aggregate, coarse aggregate or preferably both fine and coarse aggregates. The aggregate can comprise virgin raw materials such as sand, crushed rock and stones. The aggregate can comprise waste materials such as crushed concrete, crushed brick, crushed stone, crushed porcelain or other crushed waste materials. Particle sizes of the aggregate can be for example at most 32 mm, preferably at most 20 mm and more preferably particle sizes of the aggregate range from 1 mm to 20 mm. 9. In an embodiment, the aggregate has a particle size greater than the particle size of the pulverized solid waste. Regardless of the origin of the aggregate, the mass of the aggregate is still counted in the total mass of waste materials.

The method comprises a step 33 of adding the alkaline waste into the pulverized solid waste. The mass of the alkaline waste is at least 10 weight-% of the total mass of the waste materials. The mass of the alkaline waste is preferably at most 25 weight-% of the total mass of the waste materials and more preferably at least 15 weight-% and at most 25 weight-%.

The method of Figure 3 also comprises a step 34 of adding an additive. One or more additives can be added. The additives can comprise virgin raw materials. The additives can comprise waste materials such as aluminium oxide recovered from sand blasting or calcium carbide residue resulting from manufacturing of acetylene. The additives are used because of their beneficial effect for adjusting one or more qualities of an end product, for improving workability during mixing and casting, and for adjusting curing time. Preferably the total mass of the additives is at most 10 weight-% of the total mass of the waste materials. Regardless of the origin of the additive, the mass of the additive is still counted in the total mass of waste materials. The total amount of waste materials is always 100 weight-% and it includes any aggregates and additives regardless of their origin.

The method further comprises a step 35 of adding water to the mixture of the pulverized solid waste and the alkaline waste, including any aggregates and additives, until water content of the formed solution is at least 10 weight-% and at most 50 weight-%, preferably the water content is at most 40 weight-% and more preferably at least 15 weight-% and at most 35 weight-%. Said step of adding water can of course be omitted if the alkaline waste comprises enough water such that the water content of the mixture of the waste materials is already in the defined range. The order in which the ingredients are added is irrelevant. The ingredients can be added in the presented order or in any other order - or adding all the ingredients simultaneously.

Once all the ingredients are put together, the next step of the method is a step 36 of mixing said pulverized solid waste, said alkaline waste and water, including aggregates and additives, to form a homogeneous mixture. A skilled person is easily able to come up a suitable mixing system to result a homogeneous mixture from the ingredients in question.

When the step of mixing has resulted a homogeneous mixture, the next step of the method is a step 37 of curing said homogeneous mixture. The homogeneous mixture cures by itself in about room temperature. Before the curing step, the homogeneous mixture can be poured into a mould to result e.g. a loose brick or slab, a building block or a decorative item. As an alternative the homogeneous mixture poured into a mould could also result a fixed structure or part of a fixed structure or building, e.g. a foundation. Yet another alternative is to spread or spray the homogeneous mixture onto a surface before the curing step. One more alternative is to dry press the homogenous mixture prior to or during the curing. In a preferred embodiment, the curing step lasts at most 48 hours in a temperature of 10 °C to 30 °C.

In the method of Figure 3, after the homogenous mixture has cured, the method continues with a step 38 of covering the cured homogenous mixture with a film. The film is preferably an impermeable film, such as a plastic wrap or a plastic sheet or an anti-evaporation film. Other impermeable materials can also be used but plastic is often the cheapest alternative, readily available and easy to handle. In an embodiment, the film is formed by an anti-evaporation spray that is known e.g. from the art of casting of concrete.

The final step of the method of Figure 3 is a step 39 of postcuring the homogeneous mixture covered by a film. Preferably, the postcuring period is at least 14 days after which the film can be removed. This ends the method of the embodiment shown in Figure 3. Steps 38 and 39 can be omitted if postcuring is not required.

The following examples are based on the embodiments of the method of producing geopolymer concrete. Materials in the examples have been marked with (PS) denoting a pulverized solid waste, (AL) denoting an alkaline waste, (AG) denoting an aggregate, and (AD) denoting an additive. The term "pulverized" means that the material consists of particle sizes up to 300 micrometres, preferably up to 200 micrometres and more preferably up to 100 micrometres. The term "crushed" means material that is coarser than a pulverized material. A crushed material consists of particle sizes up to 32 millimetres, preferably up to 20 millimetres and most preferably from 1 millimetre up to 16 millimetres.

### EXAMPLE 1

In Example 1, a first waste material is pulverized stone wool (PS) and a second waste material is sodium hydroxide (AL). First 850 parts of pulverized stone wool is obtained and then 150 parts of sodium hydroxide is added. Finally, 140 parts of water is added and the ingredients are mixed until a homogeneous mixture is accomplished. The mixture is then allowed to cure. After 28 days, compression strength of 51 MPa was measured.

### EXAMPLE 2

In Example 2, a first waste material is pulverized stone wool (PS) and a second waste material is sodium hydroxide (AL). First 800 parts of pulverized stone wool is obtained and then 200 parts of sodium hydroxide is added. Finally, 97 parts of water is added and the ingredients are mixed until a homogeneous mixture is accomplished. The mixture is then allowed to cure. After 28 days, compression strength of 47 MPa was measured.

### EXAMPLE 3

In Example 3, a first waste material is pulverized stone wool (PS), a second waste material is sodium hydroxide (AL), a third waste material is aluminium oxide (AD) which was collected from a sand blasting site, and a fourth waste material is calcium carbide residue (AD) from acetylene gas manufacturing. First 780 parts of pulverized stone wool is obtained, then 150 parts of sodium hydroxide is added, then 20 parts of aluminium oxide is added, and finally 50 parts of calcium carbide residue is added. Finally, 175 parts of water is added and the ingredients are mixed until a homogeneous mixture is accomplished. The mixture is then allowed to cure. After 28 days, compression strength of 43 MPa was measured.

### EXAMPLE 4

In Example 4, a first waste material is pulverized glass wool (PS)and a second waste material is sodium hydroxide (AL). First 700 parts of pulverized glass wool is obtained and then 300 parts of sodium hydroxide is added. Finally, 53 parts of water is added and the ingredients are mixed until a homogeneous mixture is accomplished. The mixture is cured for five days in 50°C temperature. After 28 days, compression strength of 46,1 MPa was measured.

### EXAMPLE 5

In Example 5, a first waste material is pulverized stone wool (PS), a second waste material is bed sand (AG) which was collected after use, and a third waste material is sodium hydroxide (AL). First 710 parts of pulverized stone wool is obtained, then 140 parts of bed sand is added, and then 150 parts of sodium hydroxide is added. Finally, 136 parts of water is added and the ingredients are mixed until a homogeneous mixture is accomplished. The mixture is then allowed to cure. After 28 days, compression strength of 52 MPa was measured.

### EXAMPLE 6

In Example 6, a first waste material is pulverized stone wool (PS), a second waste material is pulverized brick (PS), a third waste material is lime sludge (AL), and a fourth waste material is pulverized gypsum (AL). First 600 parts of pulverized stone wool is obtained, then 150 parts of pulverized brick is added, and then 150 parts of lime sludge and 100 parts of gypsum powder is added. Finally, 120 parts of water is added and the ingredients are mixed until a homogeneous mixture is accomplished. The mixture is then allowed to cure. After 28 days, compression strength of 16 MPa was measured.

### EXAMPLE 7

In Example 7, a first waste material is pulverized brick (PS) and a second waste material is lime sludge (AL). First 750 parts of pulverized stone wool is obtained, and then 250 parts of lime sludge is added. Finally, 300 parts of water is added and the ingredients are mixed until a homogeneous mixture is accomplished. The mixture is then allowed to cure. After 28 days, compression strength of 3,3 MPa was measured.

### EXAMPLE 8

In Example 8, a first waste material is pulverized stone wool (PS), a second waste material is pulverized concrete (PS), a third waste material is crushed stone (AG), and a fourth waste material is sodium hydroxide (AL). First 550 parts of pulverized stone wool is obtained, then 150 parts of pulverized concrete and 150 parts of crushed stone is added, and then 150 parts of sodium hydroxide is added. Finally, 110 parts of water is added and the ingredients are mixed until a homogeneous mixture is accomplished. The mixture is then allowed to cure. After 28 days, compression strength of 20 MPa was measured.

### EXAMPLE 9

In Example 9, a first waste material is a mixture (PS) of pulverized stone wool and pulverized glass wool and a second waste material is sodium hydroxide (AL). First 800 parts of the mixture of pulverized stone wool and glass wool is obtained, then 200 parts of sodium hydroxide is added. Finally, 220 parts of water is added and the ingredients are mixed until a homogeneous mixture is accomplished. The mixture is then allowed to cure. After 28 days, compression strength of 23 MPa was measured.

### EXAMPLE 10

In Example 10, a first waste material is pulverized glass (PS), a second waste material is pulverized concrete (PS), a third waste material is crushed concrete (AG), and a fourth waste material is sodium hydroxide (AL). First 200 parts of pulverized glass is obtained, then 200 parts of pulverized concrete is added, and then 450 parts of crushed concrete and 150 parts of sodium hydroxide is added. Finally, 80 parts of water is added and the ingredients are mixed until a homogeneous mixture is accomplished. The mixture is then allowed to cure. After 28 days, compression strength of 14 MPa was measured.

### EXAMPLE 11

In Example 11, a first waste material is pulverized glass wool (PS), a second waste material is sand (AG) having particle sizes from 0 mm to 4 mm, a third waste material is crushed stone (AG) having particle sizes from 4 mm to 20 mm, and a fourth waste material is sodium hydroxide (AL). First 350 parts of pulverized stone wool is obtained, then 200 parts of sand and 300 parts of crushed stone is added, and then 150 parts of sodium hydroxide is added. Finally, 60 parts of water is added and the ingredients are mixed until a homogeneous mixture is accomplished. The mixture is cured for five days in 50°C temperature. After 28 days, compression strength of 28 MPa was measured.

Examples 1 to 11 describe various alternatives for the pulverized solid waste, alkaline waste, aggregates and additives. The examples demonstrate that the method can be implemented with a wide range of materials falling into the categories defined in the present disclosure. Any examples or lists of suitable materials are meant to be non-exhaustive and presented in order to give a person skilled in the art a general teaching of embodiments of the invention.

It is obvious to the skilled person in the art that, as technology develops, the basic idea of the invention can be implemented in various ways. The invention and its embodiments are therefore not limited to only the examples presented above, rather they may vary within the scope of the claims.

## Claims

1. A method of producing geopolymer concrete from at least two waste materials, where at least one of said waste materials is a pulverized solid waste comprising silicon and at least one of said waste materials is an alkaline waste comprising liquid waste or water-soluble waste, wherein the method comprises
a step of obtaining the pulverized solid waste, where the mass of the pulverized solid waste is at least 40 weight-% of the total mass of the waste materials,
a step of adding the alkaline waste into the pulverized solid waste, where the mass of the alkaline waste is at least 10 weight-% of the total mass of the waste materials,
a step of adding water to the mixture of the pulverized solid waste and the alkaline waste until water content of the formed solution is at least 10 weight-% and at most 50 weight-%,
a step of mixing said pulverized solid waste, said alkaline waste and water to form a homogeneous mixture, and
a step of curing said homogeneous mixture.

2. The method of claim 1, wherein the pulverized solid waste is a waste from a demolished building or structure.

3. The method of claim 1 or 2, wherein the pulverized solid waste consists of particles having particle size smaller than 300 micrometres.

4. The method of any one of claims 1 to 3, wherein the pulverized solid waste comprises at least 95 weight-% of mineral wool, concrete, brick, glass or gypsum, the remainder being impurities.

5. The method of any one of claims 1-4 wherein the alkaline waste is a waste from aluminium industry, the alkaline waste comprising sodium hydroxide and aluminium.

6. The method of any one of claims 1-4 wherein the alkaline waste comprises lime sludge.

7. The method of any one of claims 1-4, wherein the alkaline waste comprises pulverized gypsum.

8. The method of any one of claims 1-7, wherein the method further comprises a step of adding a second pulverized solid waste comprising aluminium.

9. The method of any one of claims 1-8, wherein the method further comprises a step of adding, before the step of mixing, an aggregate having a particle size greater than the particle size of the pulverized solid waste, and where the mass of the aggregate is included in the total mass of the waste materials.

10. The method of claim 9, wherein the aggregate is selected from a group: crushed concrete, crushed stone, crushed brick.

11. The method of any one of claims 1 to 10, wherein the step of curing lasts at most 48 hours in a temperature of 10 to 30 °C.

12. The method of any one of claims 1 to 11, wherein after the step of curing, the method further comprises a step of postcuring said homogenous mixture by wrapping the cured homogeneous mixture into an impermeable film for at least 14 days.

13. The method of any one of claims 1 to 11, wherein after the step of curing, the method further comprises a step of postcuring said homogenous mixture by means of an anti-evaporation spray or an anti-evaporation film.
